# FASCICULE DE BREVET EUROPEEN

(11) **EP 3 126 720 B1**
(45) Date de publication et mention de la délivrance du brevet: **18.03.2020**
(21) Numéro de dépôt: 15717580.3
(22) Date de dépôt: 31.03.2015
(51) Int. Cl.: F16K 1/22, F02D 41/00, F02D 11/10, F16K 27/02, F02M 26/53, F02M 26/54, F02M 26/67, F02M 26/73, F16K 31/04

(54) **VANNE À CORPS DE VANNE PERFECTIONNÉ ET PROCÉDÉ DE FABRICATION D'UNE TELLE VANNE**
VENTIL MIT VERBESSERTEM VENTILKÖRPER UND HERSTELLUNGSVERFAHREN EINES SOLCHEN VENTILS
VALVE COMPRISING AN IMPROVED VALVE BODY AND METHOD FOR PRODUCING SUCH A VALVE

(30) Priorité: 01.04.2014 FR 1452880
(43) Date de publication de la demande: 08.02.2017
(73) Titulaire: Valeo Systèmes De Contrôle Moteur, 95800 Cergy Saint Christophe (FR)
(72) Inventeur: GAUTIER, Sylvain, F-95300 Ennery (FR); RIBERA, Frédéric, F-78260 Acheres (FR)
(74) Mandataire: Garcia, Christine
(86) Numéro de dépôt international: PCT/FR2015/050830
(87) Numéro de publication internationale: WO 2015/150690

(56) Documents cités:
- EP-A1- 1 308 612
- EP-A1- 2 428 666
- EP-A1- 2 562 450
- DE-U1-202013 005 082
- FR-A1- 2 947 027
- FR-A1- 3 014 526

## Description

L'invention concerne une vanne notamment destinée au domaine de l'automobile et un procédé pour fabriquer une telle vanne. En particulier, la vanne peut être une vanne de recirculation des gaz d'échappement ou vanne EGR, de l'anglais « *Exhaust Gas Recirculation* »*.*

De manière générale, un système de recirculation des gaz d'échappement d'un moteur à combustion interne permet de diminuer la quantité d'oxydes d'azote (NOx) présente dans les gaz d'échappement. Un tel système de recirculation comporte classiquement un canal de recirculation sur la tubulure d'échappement des gaz, ce canal de dérivation étant équipé d'une vanne, dite vanne EGR, permettant de réguler le débit et de renvoyer à l'admission du moteur la quantité désirée de gaz d'échappement.

La vanne comporte un corps à l'intérieur duquel est formé un conduit, qui forme un tronçon du canal de recirculation, le conduit pouvant être sélectivement obturé. La vanne comporte également un organe de commande de l'ouverture et de la fermeture du conduit. L'organe de commande est actionné par un moteur électrique qui peut également être logé dans le corps.

Un organe de commande connu prend la forme d'une roue à secteur denté entraînée en rotation par un pignon de sortie du moteur électrique, éventuellement via une roue de transmission. Les rotations de la roue à secteur denté sont alors transformées en translations d'une soupape par rapport à un siège de la vanne, disposé dans le conduit, au moyen d'un dispositif de transformation de mouvements. Un tel dispositif de transformations de mouvements est par exemple décrit dans la demande EP 1 308 612 A1 ou la demande FR-A-2 947 027, au nom de la Demanderesse. Le dispositif de transformation de mouvements comprend tout d'abord une jupe solidaire en rotation de la roue à secteur denté. La jupe entraîne en rotation un attelage comprenant un barreau muni à ses extrémités de galets. Le barreau est solidaire en translation d'une tige portant à son extrémité la soupape. Les galets sont reçus dans un chemin de came d'une came à chemin de came (ou came cylindrique), de telle sorte que la rotation de la roue à secteur denté provoque une translation de la soupape par rapport au siège de la vanne. En outre, un ressort de rappel peut être prévu pour rappeler la roue à secteur denté dans une position déterminée et/ou pour maintenir la roue à secteur denté dans cette position, en l'absence d'actionnement de la vanne par le moteur d'actionnement.

Pour le bon fonctionnement d'une vanne de ce type, il est important que la came soit positionnée de manière précise. En effet, si la came n'est pas parfaitement orientée, il y a un risque que la tige soit également mal orientée. Par suite, la soupape peut ne pas se reposer sur toute la périphérie du siège de vanne de sorte que la vanne reste partiellement ouverte.

Pour obtenir une position précise de la came cylindrique de la vanne, il peut être prévu que la came soit reçue dans un logement formé dans le corps de came, le fond du logement destiné à recevoir cette came pouvant alors être usiné, après le moulage du corps de vanne. Ce procédé est long et couteux. Il faut en effet obtenir une surface de fond du logement parfaitement plane, adapté au fond de la came cylindrique.

En outre, dans le cas d'une vanne EGR, les gaz d'échappement étant relativement chaud, il est connu de faire circuler de l'eau dans le corps de la vanne EGR pour la refroidir. Dans ce cas, un ou plusieurs conduits de circulation d'eau peuvent être prévus dans le corps de vanne, lesquels peuvent être adaptés à être mis en communication de fluide avec des conduits de circulation d'eau dans la culasse du moteur. Les conduits de circulation d'eau peuvent être proches du logement de réception de la came cylindrique. Dès lors, notamment quand le corps de vanne est réalisé par injection sous pression, l'usinage du fond du logement peut créer des chemins de fuite entre le logement de réception de la came et le conduit de circulation d'eau. Ceci peut nuire à l'intégrité de la vanne en provoquant de la corrosion ou même un court-circuit.

Les mêmes problématiques se posent pour tout logement formé dans un corps de vanne destiné à recevoir un organe de la vanne, comme par exemple le moteur d'actionnement de la vanne.

Le but de l'invention est donc de proposer une solution aux problèmes mentionnés ci-dessus. En particulier, l'invention vise à proposer une vanne comprenant un corps de vanne permettant une mise en position précise d'un organe de la vanne tel qu'un moteur d'actionnement ou une came cylindrique de la vanne, par exemple. De préférence, la solution proposée limite les risques de perte d'étanchéité dans la vanne.

À cette fin, l'invention propose une vanne, notamment une vanne pour véhicule automobile, en particulier une vanne de recirculation des gaz d'échappement, comprenant un corps de vanne avec un logement de réception d'un organe de la vanne, l'organe étant de préférence de forme sensiblement tubulaire, le fond du logement présentant au moins une nervure, de préférence au moins deux nervures, en contact avec l'organe de la vanne.

Ainsi, avantageusement, selon l'invention, la position de l'organe de la vanne reçue dans le logement est définie précisément par les seules nervures au fond du logement. Ainsi, en particulier, seules ces nervures sont éventuellement à usiner pour obtenir une position de l'organe de la vanne encore plus précise. La vanne selon l'invention est donc plus rapide à fabriquer et donc moins coûteuse. En outre, seules les nervures étant éventuellement usinées, les risques de fuite dans la vanne, notamment au niveau du fond du logement sont réduits.

L'organe de la vanne repose avantageusement uniquement sur cette ou ces nervures, en relief saillant par rapport au fond du logement.

De préférence, le corps de vanne selon l'invention présente une ou plusieurs des caractéristiques suivantes, prises seules ou en combinaison :
- L'organe est choisi parmi :
   - un moteur d'actionnement de la vanne, de préférence électrique, et
   - une came à chemin de came pour transformer la rotation d'un organe de commande de l'ouverture de la vanne en mouvement de va-et-vient d'une soupape dans un conduit ;
- la vanne comprend en outre :
   - un attelage, destiné à être entraîné en rotation, guidé par le chemin de came, et
   - une tige de soupape, solidaire en translation de l'attelage et de la soupape ;
- le corps de vanne est réalisé par injection sous pression et usinage de la ou des nervures, uniquement ;
- le corps de vanne comprend en outre un conduit de circulation de fluide de refroidissement de la vanne ;
- le corps de vanne comprend au moins un trou fileté, de préférence au moins deux trous filetés, débouchant au niveau du fond du logement, le ou les trous filetés recevant une vis de fixation de l'organe de la vanne, notamment de la came, au corps de vanne ;
- au moins une nervure présente une forme de « M », l'âme de chaque « M » formant de préférence une portion du rebord de l'un des trous filetés ;
- le fond du logement de réception de la came présente un trou de passage de la tige de soupape, de préférence sensiblement au centre du fond du logement ;
- le logement comprend une pluralité de nervures, les nervures étant équiréparties angulairement ;
- la ou les nervures s'étendent depuis la paroi latérale du logement ;
- la ou les nervures s'étendent radialement sur le fond du logement, de préférence sur une longueur inférieure à la moitié du rayon du fond du logement ;
- le logement est sensiblement tubulaire, de préférence sensiblement cylindrique ;
- la vanne comprend en outre un organe de commande de la rotation de l'attelage, solidaire en rotation de l'attelage et entraîné en rotation par la rotation du moteur d'actionnement ; et
- le moteur d'actionnement comprend un arbre de sortie solidaire en rotation d'un pignon, l'organe de commande comprenant une roue à secteur denté engrenée par le pignon, éventuellement à travers un engrenage de réduction de la vitesse de rotation du moteur, la roue à secteur denté étant solidaire en rotation de l'attelage.

Selon un autre aspect, l'invention se rapporte à un procédé de fabrication d'une vanne telle que décrite ci-avant dans toutes ses combinaisons, comprenant les étapes consistant à :
- mouler, de préférence par moulage sous pression, le corps de vannes, pour y former un logement, de préférence sensiblement tubulaire, présentant un fond avec au moins une nervure ; et
- insérer, dans le logement, au moins un organe de la vanne, de préférence un ensemble comprenant au moins la came, l'attelage reçu dans le chemin de came de la came, et la tige de soupape.

De manière préférée, le procédé de fabrication comprend en outre une étape, postérieure à l'étape de moulage du corps de vanne, consistant à usiner uniquement la surface de la ou des nervures.

L'invention sera mieux comprise à la lumière de la description qui va suivre, description faite en référence aux dessins annexés, parmi lesquels :
- les figures 1 et 2 représentent schématiquement en perspective, un dispositif de transformation de mouvement pour une vanne EGR, respectivement en vue éclatée et assemblé ;
- la figure 3 représente schématiquement une vue de dessus d'un corps de vanne EGR ; et
- la figure 4 représente un détail de la vue de la figure 3.

Telle qu'illustrée sur les figures, une vanne EGR 1 comporte un corps de vanne 2 formant un conduit pour la circulation de gaz d'échappement à faire recirculer. Le corps de vanne forme également, ici, un conduit de circulation d'eau pour de l'eau de refroidissement de la vanne. Le corps de vanne 2 présente également des trous de fixation de la vanne à un bloc motopropulseur d'un véhicule automobile. De tels trous de fixation peuvent notamment être réalisés dans des brides ou collerettes entourant les débouchés du conduit de circulation d'eau de refroidissement permettant ainsi d'intégrer le conduit de circulation d'eau de refroidissement de la vanne dans le conduit de circulation d'eau de refroidissement du moteur sur laquelle la vanne est fixée. De tels trous de fixation peuvent également être réalisés dans des brides ou collerettes entourant les débouchés du conduit de recirculation de gaz d'échappement.

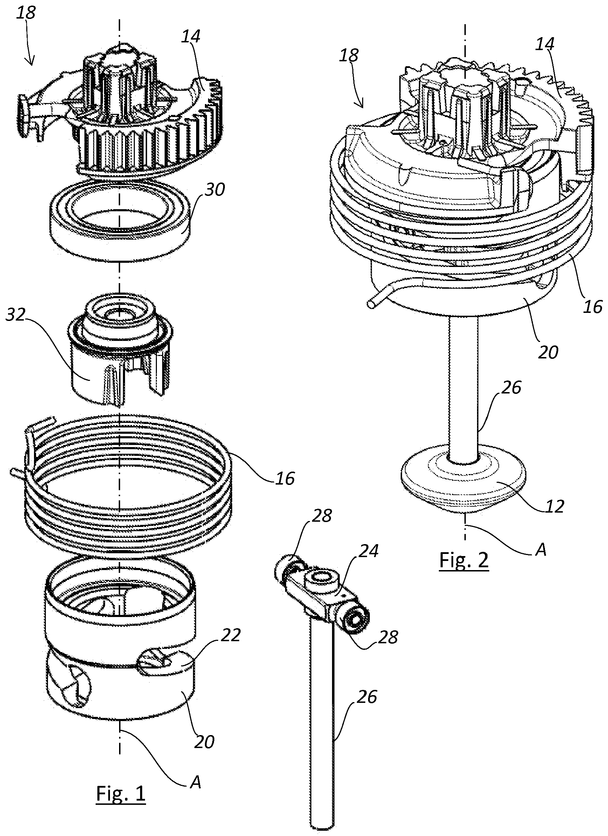

Une telle vanne comporte par ailleurs, telle qu'illustrée aux figures 1 et 2, une soupape 12 qui permet l'introduction et le dosage d'un fluide, ici les gaz d'échappement, dans une canalisation, ici l'admission. La vanne est du type comprenant un organe de commande 14 tournant à l'encontre d'un ressort de rappel 16 agissant en torsion.

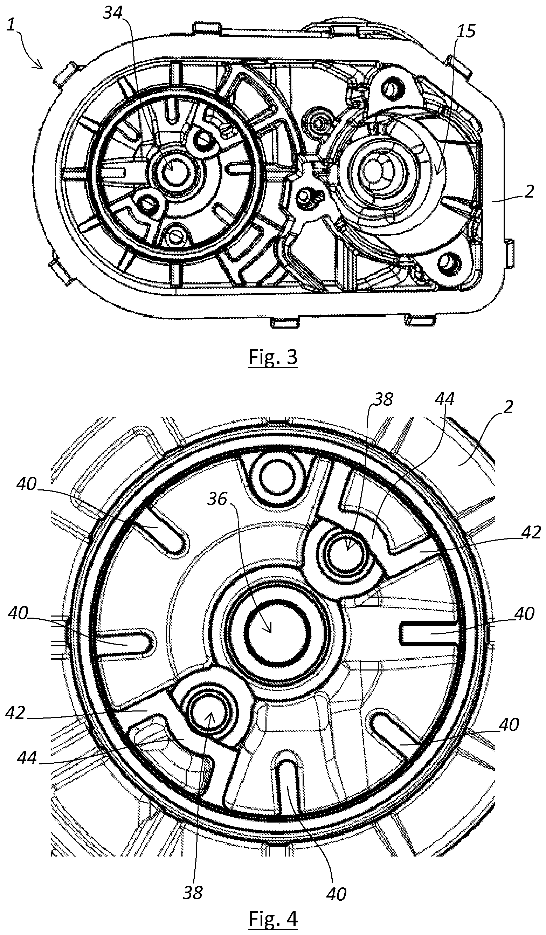

La vanne 1 comporte également un moteur qui peut être monté dans un logement 15 (cf figure 3) formé par le corps de vanne 2. Le moteur engrène une roue de transmission. La roue de transmission engrène à son tour l'organe de commande 14, ici une roue à secteur denté. Le moteur est ainsi adapté à entraîner en rotation la roue à secteur denté 14.

Le mouvement de rotation de la roue à secteur denté 14 est transformé en mouvement de va-et-vient de la soupape 12 grâce à un dispositif de transformation de mouvements 18. Par mouvement de va-et-vient, on entend ici un mouvement comprenant une translation selon un axe, éventuellement combinée à une rotation par rapport à ce même axe.

Le dispositif de transformation de mouvements 18 comporte à cet effet, à l'intérieur d'un organe support formé par le corps de vanne, une came 20 à chemin de came 22 (ou came cylindrique), un barreau 24 (ou attelage) coopérant avec le chemin de came 22 de la came cylindrique 20, le barreau 24 étant fixé à l'extrémité d'une tige 26 solidaire de la soupape 12. Pour guider la tige 26 dans le corps de vanne, il peut être prévu un ou plusieurs paliers entre la tige 26 et le corps de vanne. Il peut être prévu un jeu entre la tige 26 et le barreau 24 pour permettre une rotation de la tige par rapport au barreau, autour de l'axe de la tige, le barreau et la tige étant solidaire en translation selon la direction de l'axe de la tige.

Le chemin de came 22 est ici formé de deux pistes identiques, de part et d'autre d'une paroi tubulaire de la came cylindrique 20. Le barreau 24 est muni à chacune de ses extrémités d'un galet 28 coopérant avec le chemin de came de sorte que, lorsque la roue à secteur denté 14 est entraînée en rotation, celle-ci entraîne à son tour le barreau 24 en rotation provoquant, grâce au parcours des galets 28 dans le chemin de came 22, la translation, ou tout du moins le va-et-vient, de la soupape 12. La soupape 12, la tige 26 et le barreau 24 sont solidaires en translation dans la direction de l'axe A de déplacement de la soupape 12, cette translation répondant à la rotation de la roue à secteur denté 14 autour de ce même axe A.

Entre la roue à secteur denté 14 et la came cylindrique 20, il est disposé un palier 30, ici un roulement à billes, pour permettre la rotation de la roue à secteur denté 14 par rapport à la came cylindrique 20.

Par ailleurs, la roue à secteur denté 14 est solidaire en rotation d'une jupe 32 prévue pour coopérer avec le barreau 24. Cette jupe 32 comporte deux parois longitudinales symétriques et s'étendant essentiellement parallèlement à la direction A de rotation de la roue à secteur denté 14 et de translation de la soupape 12. Les deux parois longitudinales définissent entre elles un logement pour le barreau 24. Ainsi, le barreau 24 est disposé dans le logement de sorte que la roue à secteur denté 14 soit apte à entraîner en rotation le barreau 24 par l'intermédiaire des parois longitudinales de la jupe 32, et que le barreau 24 soit libre de coulisser dans le logement dans la direction de translation de la soupape 12.

Par conséquent, au sein de la vanne, la rotation de la roue à secteur denté 14 entraîne la rotation du barreau 24 dont les galets 28 roulent alors sur le chemin de came 22 de la came cylindrique 20, fixe, ce qui entraîne conjointement un mouvement de la soupape 12 dans la direction de l'axe A, de déplacement de la soupape 12 et de rotation de la roue à secteur denté 14, entre une position de la soupape 12 correspondant à une fermeture de la vanne et au moins une position de la soupape correspondant à une ouverture de vanne, étant entendu qu'à chaque position de la soupape 12 correspond une unique position angulaire distincte de la roue à secteur denté 14.

Pour rappeler la soupape 12 en position de fermeture de la vanne, et/ou la maintenir dans cette position en l'absence d'actionnement par le moteur, la roue à secteur denté 14 est reliée à l'organe de support au moyen d'un ressort de rappel 16 agissant en torsion. Ainsi, l'ouverture de la vanne 10 est commandée par la rotation de la roue à secteur denté 14, organe de commande, elle-même provoquée par la rotation du moteur, organe d'actionnement, à rencontre d'une force de rappel exercée sur la roue à secteur denté 14 par le ressort de rappel 16.

Le ressort de rappel 16 est ici un ressort hélicoïdal d'axe A correspondant à l'axe de rotation de la roue à secteur denté 14. Le ressort de rappel 16 est relié, à une extrémité, à l'organe de support et, à l'autre extrémité, à la roue à secteur denté 14, de telle sorte de la rotation de la roue à secteur denté 14 commandant l'ouverture de la vanne provoque une torsion du ressort de rappel 16. En particulier, le ressort de rappel 16 peut être relié à l'organe support du fait qu'une de ses extrémités, pliée dans le sens opposé du reste de l'enroulement hélicoïdal du ressort de rappel 16, est reçue dans un trou dans l'organe de support ou coopère avec une butée formée à cet effet par le ressort de rappel 16. Le ressort de rappel 16 est ici reçu dans un logement sensiblement cylindrique délimité par l'organe de support, la came cylindrique 22 et la roue à secteur denté 14.

Le moteur coupé, le ressort de rappel 16 exerce un effort de rappel rappelant la roue à secteur denté 14 dans sa position correspondant à la position de fermeture de la vanne. Cette position de la roue à secteur denté 14 correspondant à la fermeture de la vanne peut correspondre à un état précontraint du ressort de rappel 16. En d'autres termes, dans la position de la roue à secteur denté 14 correspondant à la fermeture de la vanne, le ressort de rappel 16 exerce un effort sur la roue à secteur denté 14 tendant à la faire tourner. Cependant, la rotation de la roue à secteur denté 14 au-delà de la position correspondant à la fermeture de la vanne est empêchée du fait que la soupape 12 est en buté contre un siège de vanne.

On va maintenant décrire plus spécifiquement comment la came cylindrique 20 est reçue dans un logement de came 34, prévu à cet effet dans le corps de vanne 2, ceci en regard des figures 4 et 5 plus particulièrement.

Le logement de came est de forme sensiblement complémentaire à la came cylindrique 20 et de diamètre sensiblement égal au diamètre extérieur de la came cylindrique 20, ceci afin de permettre l'insertion de la came cylindrique 20 dans le logement de came 34, la came cylindrique 20 étant ajustée dans le logement de came 34 pour contribuer à un positionnement précis de la came cylindrique 20.

En outre, le fond du logement de came 34 présente une ouverture centrale 36 en forme de disque, pour le passage de la tige de soupape 26. Le fond du logement de came 34 présente encore deux trous 38, filetés, pour des vis de fixation de la came cylindrique 20 au corps de vanne 2.

Enfin, le fond du logement de came 34 présente des nervures 40, 42. Les nervures 40, 42 sont orientées essentiellement radialement, c'est-à-dire dans des directions allant du centre du fond du logement de came 34 vers la paroi latérale cylindrique. Les nervures 40, 42 s'étendent ici radialement sur une longueur inférieure à la moitié du rayon du logement de came 34.

En outre, les nervures 40, 42 présentent une hauteur vis-à-vis du fond du logement d'au moins 1 mm pour permettre leur usinage sans risquer d'obtenir une surface du fond du logement plane. La largeur des nervures est d'environ 2 mm pour permettre de supporter efficacement la came.

Les nervures sont ici de deux types différents. Un premier type de nervures 40 s'étend pratiquement exclusivement radialement. Ces nervures présentent de préférence une extrémité libre de section arrondie, notamment en forme de demi-disque, pour des raisons de facilité de réalisation de ces nervures par moulage.

Les nervures 42 du deuxième type présentent une forme de « M » issu de la paroi cylindrique du logement de came 34. L'âme 44 du « M » correspond au bord d'un trou de vis 38, pour mieux reprendre les efforts des têtes de vis et ainsi assurer l'efficacité de la liaison de la came 20 avec le corps de vanne 2. Par « âme du M », on entend ici la partie reliant le sommet des deux branches verticale d'un « M », donc, ici, la partie reliant les deux portions radiales des nervures 42.

La came cylindrique 20 repose uniquement sur les nervures 40, 42, en relief saillant par rapport au fond du logement de came 34. Ainsi, seule la perpendicularité avec l'axe de translation de la soupape, des zones de contacts de la came cylindrique 20 avec ces nervures 40, 42 doit être obtenue précisément (et non la perpendicularité de la totalité du fond du logement de came 34). Ainsi, on limite la zone à usiner précisément à ces seules nervures, ce qui constitue un gain de temps et donc une réduction du prix de fabrication. En outre, ces nervures s'étendant sur une longueur réduite, on limite encore la surface à usiner.

En outre, de manière avantageuse, le corps de vanne 2, décrit ci-avant, est réalisé par moulage par injection sous pression, par exemple d'un alliage d'aluminium. En effet, un tel moulage sous pression est très rapide, notamment de l'ordre de quelques dixièmes de milliseconde, par rapport à un moulage gravitaire. Cependant, la surface des nervures 40, 42 est usinée pour en assurer un état de surface permettant de définir avec précision la position de la came cylindrique 20 reçu dans le logement de came 34. De préférence, seule la surface des nervures est usinée. Ceci permet notamment de limiter les risques de fuite au niveau du fond du logement de came 34. En effet, il est connu qu'un moulage sous pression forme un effet de peau qui assure l'étanchéité d'une surface. Cependant, l'usinage de cette surface tend à détruire cette peau étanche pour laisser apparaître à la surface une structure poreuse, propice aux fuites. En limitant la zone usinée aux seules nervures, on limite la portion du fond du logement qui présente une surface poreuse, notamment par rapport à un procédé connu dans lequel on usine toute la surface. En outre, la surface usinée est limitée ici aux parties présentant une épaisseur de matière accrue, ce qui limite encore la création de chemins de fuite, par rapport au procédé connu décrit ci-avant.

Bien entendu, la présente invention n'est pas limitée à la description qui vient d'en être donnée mais de nombreuses variantes sont possibles, sans sortir du cadre de l'invention défini par le jeu de revendications.

Ainsi, l'exemple représenté de logement de came présente six nervures, dont deux présentent une forme de « M ». Bien entendu ce nombre n'est pas limitatif, ni le type. On peut par exemple imaginer de n'avoir que des rainures 40 s'étendant pratiquement uniquement radialement ou uniquement des rainures en « M ». Le nombre de ces rainures n'est pas non plus limitatif.

Cependant, pour une homogénéité du support de la came cylindrique sur les nervures du fond du logement de came, les nervures sont de préférences équiréparties angulairement et/ou disposées de manière sensiblement symétrique par rapport au centre du fond du logement de came.

Enfin, il a été décrit ci-dessus à titre d'exemple le cas d'un logement de réception d'une came. Bien entendu, l'enseignement ci-dessus s'applique à tout logement de réception d'un organe de la vanne, de préférence d'un organe tubulaire voire cylindrique de la vanne, tel que le moteur d'actionnement de la vanne par exemple.

Il peut également comporter plusieurs logements qui peuvent tous ou seulement une fraction de ceux-ci, être du type du logement de came décrit ci-avant.

## Revendications

1. Vanne (1), pour véhicule automobile, de recirculation des gaz d'échappement, comprenant un corps de vanne (2) avec un logement (34; 15) de réception d'un organe (20) de la vanne, l'organe étant de forme sensiblement tubulaire, le fond du logement (34 ; 15) présentant au moins deux nervures (40, 42), en contact avec l'organe (20) de la vanne.

2. Vanne selon la revendication 1, dans laquelle l'organe est choisi parmi :
- un moteur d'actionnement de la vanne, et
- une came (20) à chemin de came (22) pour transformer la rotation d'un organe de commande de l'ouverture de la vanne en mouvement de va-et-vient d'une soupape (26) dans un conduit.

3. Vanne selon la revendication 2, comprenant en outre :
- un attelage (24, 28), destiné à être entraîné en rotation, guidé par le chemin de came (22), et
- une tige de soupape (26), solidaire en translation de l'attelage (24, 28) et de la soupape.

4. Vanne selon l'une quelconque des revendications précédentes, dont le corps de vanne (2) est réalisé par injection sous pression et usinage de la ou des nervures (40, 42), uniquement.

5. Vanne selon l'une quelconque des revendications précédentes, dont le corps de vanne (2) comprend en outre un conduit de circulation de fluide de refroidissement de la vanne.

6. Vanne selon l'une quelconque des revendications précédentes, dans laquelle le corps de vanne (2) comprend au moins un trou fileté (38), débouchant au niveau du fond du logement (34 ; 15), le trou fileté (38) recevant une vis de fixation (40) de l'organe de la came (20) au corps de vanne (2).

7. Vanne selon la revendication 6, dans laquelle au moins une nervure (42) présente une forme de « M », l'âme (44) de chaque « M » formant une portion du rebord de l'un des trous filetés (38).

8. Vanne selon l'une quelconque des revendications précédentes, l'organe étant une came (20) à chemin de came (22), dans laquelle le fond du logement (34) de réception de la came (20) présente un trou (36) de passage de la tige de soupape (26), sensiblement au centre du fond du logement (34).

9. Vanne selon l'une quelconque des revendications précédentes, dans laquelle le logement (34 ; 15) comprend une pluralité de nervures (40, 42), les nervures étant équiréparties angulairement.

10. Vanne selon l'une quelconque des revendications précédentes, dans laquelle la ou les nervures (40, 42) s'étendent depuis la paroi latérale du logement (34, 15).

11. Vanne selon l'une quelconque des revendications précédentes, dans laquelle la ou les nervures (40, 42) s'étendent radialement sur le fond du logement (34, 15), sur une longueur inférieure à la moitié du rayon du fond du logement (34, 15).

12. Vanne selon l'une quelconque des revendications précédentes, dans laquelle le logement (34, 15) est sensiblement tubulaire.

13. Vanne selon la revendication 11 ou 12, comprenant en outre un organe (14) de commande de la rotation de l'attelage (24, 28), solidaire en rotation de l'attelage (24, 28) et entraîné en rotation par la rotation du moteur d'actionnement.

14. Vanne selon la revendication 13, dans laquelle le moteur d'actionnement comprend un arbre de sortie solidaire en rotation d'un pignon, l'organe de commande comprenant une roue à secteur denté (14) engrenée par le pignon, à travers un engrenage de réduction de la vitesse de rotation du moteur, la roue à secteur denté (14) étant solidaire en rotation de l'attelage (24, 28).

15. Procédé de fabrication d'une vanne selon l'une quelconque des revendications précédentes, comprenant les étapes consistant à :
- mouler, par moulage sous pression, le corps de vannes (2), pour y former au moins un logement (34), sensiblement tubulaire, présentant un fond avec au moins deux nervures (40, 42) ; et
- insérer, dans le logement, un ensemble comprenant au moins la came (20), l'attelage (24, 28) reçu dans le chemin de came (22) de la came (20), et la tige de soupape (26).

16. Procédé de fabrication d'une vanne selon la revendication 15, comprenant en outre une étape, postérieure à l'étape de moulage du corps de vanne (2), consistant à usiner uniquement la surface de la ou des nervures (40, 42).

## Patentansprüche

1. Ventil (1), für ein Kraftfahrzeug, zur Abgasrückführung, welches einen Ventilkörper (2) mit einem Aufnahmeraum (34; 15) zur Aufnahme eines Organs (20) des Ventils umfasst, wobei das Organ im Wesentlichen rohrförmig ist, wobei der Boden des Aufnahmeraumes (34; 15) wenigstens zwei Rippen (40, 42) aufweist, die sich mit dem Organ (20) des Ventils in Kontakt befinden.

2. Ventil nach Anspruch 1, wobei das Organ ausgewählt ist aus:
- einem Motor zur Betätigung des Ventils und
- einem Nocken (20) mit einer Nockenbahn (22) zum Umwandeln der Drehbewegung eines Organs zur Steuerung des Öffnens des Ventils in eine hin-und hergehende Bewegung eines Ventilelements (26) in einer Leitung.

3. Ventil nach Anspruch 2, welches außerdem umfasst:
- eine Kupplung (24, 28), die dazu bestimmt ist, drehend angetrieben zu werden, geführt durch die Nockenbahn (22), und
- einen Ventilschaft (26), der mit der Kupplung (24, 28) und dem Ventilelement verschiebefest verbunden ist.

4. Ventil nach einem der vorhergehenden Ansprüche, dessen Ventilkörper (2) ausschließlich durch Druckgießen und durch spanabhebende Bearbeitung der Rippe oder Rippen (40, 42) hergestellt ist.

5. Ventil nach einem der vorhergehenden Ansprüche, dessen Ventilkörper (2) außerdem einen Kanal zur Zirkulation von Kühlfluid für das Ventil umfasst.

6. Ventil nach einem der vorhergehenden Ansprüche, wobei der Ventilkörper (2) wenigstens eine Gewindebohrung (38) umfasst, die am Boden des Aufnahmeraumes (34; 15) mündet, wobei die Gewindebohrung (38) eine Schraube (40) zur Befestigung des Organs des Nockens (20) am Ventilkörper (2) aufnimmt.

7. Ventil nach Anspruch 6, wobei wenigstens eine Rippe (42) eine "M"-Form aufweist, wobei das Mittelstück (44) jedes "M" einen Abschnitt des Randes einer der Gewindebohrungen (38) bildet.

8. Ventil nach einem der vorhergehenden Ansprüche, wobei das Organ ein Nocken (20) mit einer Nockenbahn (22) ist, wobei der Boden des Aufnahmeraumes (34) zur Aufnahme des Nockens (20) ein Loch (36) für die Durchführung des Ventilschaftes (26) im Wesentlichen in der Mitte des Bodens des Aufnahmeraumes (34) aufweist.

9. Ventil nach einem der vorhergehenden Ansprüche, wobei der Aufnahmeraum (34; 15) mehrere Rippen (40, 42) umfasst, wobei die Rippen in gleichen Winkelabständen verteilt sind.

10. Ventil nach einem der vorhergehenden Ansprüche, wobei sich die Rippe oder die Rippen (40, 42) von der Seitenwand des Aufnahmeraumes (34; 15) aus erstrecken.

11. Ventil nach einem der vorhergehenden Ansprüche, wobei sich die Rippe oder die Rippen (40, 42) radial auf dem Boden des Aufnahmeraumes (34; 15) auf einer Länge erstrecken, die kleiner als die Hälfte des Radius des Bodens des Aufnahmeraumes (34; 15) ist.

12. Ventil nach einem der vorhergehenden Ansprüche, wobei der Aufnahmeraum (34; 15) im Wesentlichen rohrförmig ist.

13. Ventil nach Anspruch 11 oder 12, welches außerdem ein Organ (14) zur Steuerung der Rotation der Kupplung (24, 28) umfasst, das mit der Kupplung (24, 28) drehfest verbunden ist und durch die Rotation des Betätigungsmotors drehend angetrieben wird.

14. Ventil nach Anspruch 13, wobei der Betätigungsmotor eine Abtriebswelle umfasst, die mit einem Ritzel drehfest verbunden ist, wobei das Steuerungsorgan ein Zahnsegmentrad (14) umfasst, in welches das Ritzel über ein Getriebe zur Reduzierung der Drehzahl des Motors eingreift, wobei das Zahnsegmentrad (14) mit der Kupplung (24, 28) drehfest verbunden ist.

15. Verfahren zur Herstellung eines Ventils nach einem der vorhergehenden Ansprüche, welches die folgenden Schritte umfasst:
- Formen, durch Druckgießen, des Ventilkörpers (2), um hier wenigstens einen im Wesentlichen rohrförmigen Aufnahmeraum (34) auszubilden, der einen Boden mit wenigstens zwei Rippen (40, 42) aufweist; und
- Einfügen, in den Aufnahmeraum, einer Anordnung, welche wenigstens den Nocken (20), die in der Nockenbahn (22) des Nockens (20) aufgenommene Kupplung (24, 28) und den Ventilschaft (26) umfasst.

16. Verfahren zur Herstellung eines Ventils nach Anspruch 15, welches außerdem nach dem Schritt des Formens des Ventilkörpers (2) einen Schritt umfasst, der darin besteht, ausschließlich die Oberfläche der Rippe oder der Rippen (40, 42) spanabhebend zu bearbeiten.

## Claims

1. Motor vehicle exhaust gas recirculation valve, comprising a valve body (2) with a housing (34; 15) to accommodate a component (20) of the valve, the component preferably of substantially tubular shape, the bottom of the housing (34; 15) having at least two ribs (40, 42), in contact with the component (20) of the valve.

2. Valve according to Claim 1, in which the component is chosen from:
- a valve actuating motor, and
- a cam (20) with a camway (22) for converting the rotational movement of a component controlling the opening of the valve into a reciprocating movement of a valve head (26) in a duct.

3. Valve according to Claim 2, further comprising:
- a linkage (24, 28) intended to be driven in rotation, guided by the camway (22), and
- a valve stem (26) as one in terms of translation with the linkage (24, 28) and the valve head.

4. Valve according to any one of the preceding claims, in which the valve body (2) is produced by pressure die casting and machining of the rib or ribs (40, 42) only.

5. Valve according to any one of the preceding claims, in which the valve body (2) further comprises a duct for the circulation of valve cooling fluid.

6. Valve according to any one of the preceding claims, in which the valve body (2) comprises at least one threaded hole (38), opening into the bottom of the housing (34; 15), the threaded hole (38) accepting a fixing screw (40) for fixing the component of the cam (20), to the valve body (2).

7. Valve according to Claim 6, in which at least one rib (42) has the shape of an "M", the web (44) of each "M" forming a portion of the border of one of the threaded holes (38).

8. Valve according to any one of the preceding claims, the component being a cam (20) with a camway (22), in which valve the bottom of the housing (34) that accepts the cam (20) has a hole (36) for the passage of the valve stem (26), substantially at the center of the bottom of the housing (34).

9. Valve according to any one of the preceding claims, in which the housing (34; 15) comprises a plurality of ribs (40, 42), the ribs being evenly angularly distributed.

10. Valve according to any one of the preceding claims, in which the rib or ribs (40, 42) extend from the lateral wall of the housing (34, 15).

11. Valve according to any one of the preceding claims, in which the rib or ribs (40, 42) extend radially over the bottom of the housing (34, 15), over a length less than half the radius of the bottom of the housing (34, 15) .

12. Valve according to any one of the preceding claims, in which the housing (34, 15) is substantially tubular.

13. Valve according to Claim 11 or 12, further comprising a component (14) controlling the rotation of the linkage (24, 28) as one in terms of rotation with the linkage (24, 28) and driven in rotation by the rotation of the actuating motor.

14. Valve according to Claim 13, in which the actuating motor comprises an outlet shaft as one in terms of rotation with a pinion, the control component comprising a toothed-sector wheel (14), meshing with the pinion, via reduction gearing that reduces the rotational speed of the motor, the toothed-sector wheel (14) being as one in terms of rotation with the linkage (24, 28).

15. Method of manufacturing a valve according to any one of the preceding claims, comprising the steps involving:
- molding, using high-pressure die casting, the valve body (2) in order therein to form at least one, substantially tubular, housing (34) having a bottom with at least two ribs (40, 42); and
- inserting into the housing an assembly comprising at least the cam (20), the linkage (24, 28) housed in the camway (22) of the cam (20), and the valve stem (26).

16. Method of manufacturing a valve according to Claim 15, further comprising a step, subsequent to the step of molding the valve body (2), that involves machining only the surface of the rib or ribs (40, 42).
